(19) **Europäisches Patentamt**

**European Patent Office**

**Office européen des brevets**

(11) **EP 1 211 404 B1**

(12) **EUROPEAN PATENT SPECIFICATION**

(45) Date of publication and mention
of the grant of the patent:
**11.05.2005 Bulletin 2005/19**

(51) Int Cl.⁷: **F02D 41/40**, F02D 41/10,
F02D 21/08

(21) Application number: **01127389.3**

(22) Date of filing: **22.11.2001**

(54) **Fuel injection control device for diesel engines**

Kraftstoffeinspritzsteuersystem für Dieselmotoren

Système de commande d'injection de carburant pour moteur Diesel

(84) Designated Contracting States:
**DE ES FR GB IT**

(30) Priority: **01.12.2000 JP 2000366777**

(43) Date of publication of application:
**05.06.2002 Bulletin 2002/23**

(73) Proprietor: **Mazda Motor Corporation**
**Aki-gun, Hiroshima 730-8670 (JP)**

(72) Inventors:
• **Saito, Tomoaki**
**Aki-gun, Hiroshima 730-8670 (JP)**
• **Kondou, Terunori**
**Aki-gun, Hiroshima 730-8670 (JP)**

(74) Representative: **Müller-Boré & Partner**
**Patentanwälte**
**Grafinger Strasse 2**
**81671 München (DE)**

(56) References cited:
**EP-A- 0 990 788          EP-A- 1 128 051**
**WO-A-01/23717          DE-A- 19 721 933**
**DE-A- 19 747 231          DE-A- 19 927 485**
**FR-A- 2 793 281**

• **PATENT ABSTRACTS OF JAPAN vol. 2000, no.**
**09, 13 October 2000 (2000-10-13) & JP 2000**
**161109 A (MAZDA MOTOR CORP), 13 June 2000**
**(2000-06-13)**
• **CHMELA F G ET AL:**
**"EMISSIONSVERBESSERUNG AN**
**DIESEL-MOTOREN MIT DIREKTEINSPRITZUNG**
**MITTELS EINSPRITZVERLAUFSFORMUNG"**
**MTZ MOTORTECHNISCHE ZEITSCHRIFT,**
**FRANCKH'SCHE**
**VERLAGSHANDLUNG,ABTEILUNG TECHNIK.**
**STUTTGART, DE, vol. 60, no. 9, September 1999**
**(1999-09), pages 552-558, XP000870853 ISSN:**
**0024-8525**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

This invention relates to a fuel injection control device for diesel engines, and more specifically to a fuel injection control device for diesel engines equipped with an after-injection control means that controls after-injection for injecting added fuel after injection by the main injection.

Description of the Related Art

Japanese Unexamined Patent Publication No. 2000-170585 teaches a fuel injection control device for diesel engines that performs after-injection of added fuel in the combustion chamber at a specified timing following the normal fuel injection (main injection) to the combustion chamber for the purpose of effectively removing NOx contained in the exhaust gas of diesel engines.

In an earlier application (Japanese Patent Application No. 2000-321699) by the applicant for this patent, which does not constitute prior art with respect to the present invention, the emission of soot is effectively reduced by setting the injection time of the after-injection using the completion time of diffusion combustion by the main injection as a reference.

SUMMARY OF THE INVENTION

The present invention relates to this kind of after-injection, and its purpose is to provide a fuel injection control device for diesel engines capable of reducing the amount of soot in the exhaust gas while suppressing degradation of fuel economy.

In order to achieve this object, this invention provides a fuel injection control device for diesel engines comprising a fuel injector that injects fuel directly into the combustion chamber of the diesel engine, a main injection control means that controls the main injection of fuel from the fuel injector at a specified time near the top of the compression stroke, and an after-injection control means that controls the after-injection of added fuel from the fuel injector after the main injection, the after-injection control means controlling the injection time of after-injection based on the time at which combustion by the main injection is complete (i.e., time at which the heat generation rate of the main injection goes below approximately 0) and also increasing the fuel injection by the after-injection during an acceleration state wherein the acceleration is larger than a specified value more than when the acceleration is lower than the specified value.

Here, "increases fuel injection by after-injection" means that either the absolute amount of fuel injection by after-injection is increased or that the ratio of the after-injection amount to the main injection amount is increased. "Increasing," also includes the execution of after-injection only in a specified acceleration state without performing after-injection during normal operation, etc.

Thus, in an acceleration state wherein generation of soot increases because the air-fuel ratio (A/F) is enriched by the combined effect of a greater amount of fuel injection in the main injection and a longer new air intake delay, the fuel injection control device for diesel engines configured in the foregoing manner increases after-injection to suppress the generation and emission of soot. In a normal driving state, after-injection is reduced compared to an acceleration state, thus improving fuel efficiency.

In a preferred embodiment of this invention, the after-injection control means increases after-injection in the initial acceleration stage of the acceleration state more than during acceleration stages other than the initial acceleration stage.

The increase in the generation of soot caused by the increase in the fuel injection amount and new air intake delay is particularly large in the initial acceleration stage when the delay in new air intake is marked. However, by means of the this preferred embodiment of the invention, after-injection in the initial stage of acceleration is increased more than during acceleration after the initial stage, and, therefore, the generation of soot can be effectively suppressed in the period during which the generation of soot is particularly great.

In another preferred embodiment of the invention, the diesel engine is equipped with a turbocharger.

In an engine equipped with a turbocharger, a delay in new air intake occurs because of so-called "turbo lag" during acceleration, thus resulting in a tendency for the air-fuel ratio to become rich and the generation of soot to increase. In this preferred embodiment of the invention, after-injection is increased during acceleration, and, therefore, the generation of soot is suppressed by the increase in after-injection. Further, since the exhaust gas pressure increases due to the increase in after-injection during acceleration, the turbo lag becomes smaller and the new air intake delay is reduced, thus yielding faster acceleration and even greater suppression of soot generation.

In another preferred embodiment of the invention, the fuel injection control device for diesel engines is further provided with an EGR (Exhaust Gas Recirculation) control means that controls an EGR means for recirculating some of the exhaust gas to the air intake.

In a fuel injection control device equipped with an EGR means, a relatively large amount of the exhaust gas is recirculated to the intake side by EGR control performed under normal conditions, and, therefore, even when the operating state changes to acceleration, this exhaust gas is present in the air intake system as residual ERG gas. Therefore, during acceleration the increase in the amount of main injection combined with the rich air-fuel ratio results in an increase in the generation of soot. However, in this embodiment of this invention, the increase in after-injection during acceleration suppresses the generation of soot, thus making it possible both to reduce soot during acceleration and to reduce NOx by EGR during steady state operation.

As explained above, in a fuel injection control device for diesel engines that performs EGR control, the amount of soot increases due to residual EGR gas during acceleration. In another embodiment of the invention, however, by reducing EGR during the increase in fuel injection by the after-injection control means, i.e., when the degree of acceleration is larger than a specified value, delay in the intake of new air is suppressed and the generation of soot is decreased.

In another embodiment of the invention, the fuel injection control device for diesel engines is further provided with a pilot injection control means that controls pilot injection wherein fuel is injected from the fuel injector to perform premix combustion at a specified interval in advance of the main injection, the interval being controlled to be shorter during fuel injection increase by the after-injection control means than when fuel injection increase is not performed by the after-injection control means.

When the interval between pilot injection and main injection is shortened, noise is decreased, but the generation of soot increases. However, in this embodiment of the invention, the generation of soot during the increase in fuel injection is suppressed by the increase in after-injection by the after-injection control means, and therefore it is possible to shorten the interval between the pilot injection and main injection to reduce noise without increasing soot.

In another embodiment of the invention, the fuel injection control device for diesel engines is further provided with a pilot injection control means that controls pilot injection wherein fuel is injected from the fuel injector to perform premix combustion at a specified interval in advance of the main injection, the injection of the pilot injection being controlled to increase more during fuel injection increase by the after-injection control means than when fuel injection increase is not performed by the after-injection control means.

When the injection is increased during pilot injection, noise is decreased, but the generation of soot increases. However, in this embodiment of the invention, the generation of soot during the increase in fuel injection is suppressed by the increase in after-injection by the after-injection control means, thus making it possible to increase pilot injection to reduce noise without increasing soot.

BRIEF DESCRIPTION OF THE DRAWINGS

FIG. 1 is a schematic diagram showing the configuration a fuel injection control device for diesel engines that is an embodiment of this invention.
FIG. 2 is a flowchart showing fuel injection control executed in an ECU.
FIG. 3 is a graph showing a map for setting an amount of fuel injection.
FIG. 4 is a time chart showing heat generation rate in a combustion chamber.
FIG. 5 is a graph showing the relationship between after-injection time and amount of soot generated.
FIG. 6 is a graph showing the relationship between injection amount of after-injection and fuel efficiency.
FIG. 7 is a graph showing the relationship between injection amount of after-injection and amount of soot generated.
FIG. 8 is a graph showing the relationship between the map for setting the injection amount for after-injection and the map for setting the injection time $I_p$ for pilot injection.
FIG. 9 is a flowchart showing the EGR control executed in the exhaust gas return control means.
FIG. 10 is a graph showing a specific example of a map for setting the basic target new air amount $Air_b$.
FIG. 11 is a flowchart showing an alternative example of fuel injection control executed in the ECU.
FIG. 12 is a flowchart showing another alternative example of fuel injection control executed in the ECU.

DETAILED DESCRIPTION OF THE PREFERRED EMBODIMENTS

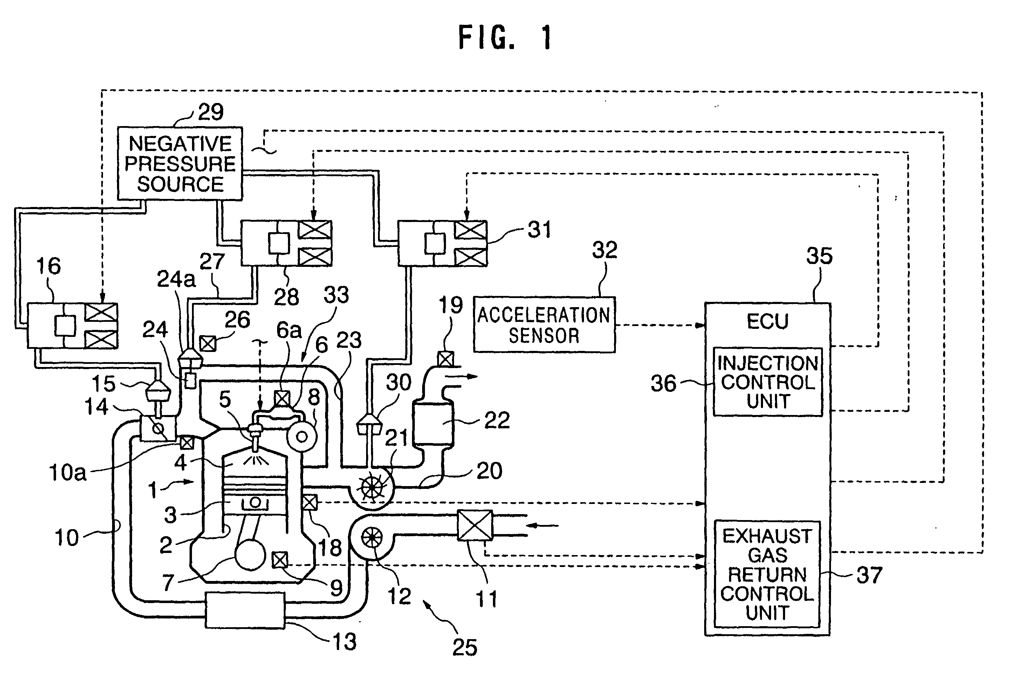

Preferred embodiments of the invention are described in detail below with reference to the drawings. FIG. 1 is a schematic diagram showing the configuration of a fuel injection control device for diesel engines that is an embodiment of the invention.

As shown in FIG. 1, the fuel injection control device is equipped with a diesel engine mounted in a vehicle. The diesel engine 1 has four cylinders 2 (only one shown in the drawing), wherein a piston 3 is disposed inside each cylinder 2, and the piston 3 and inside wall of the cylinder comprise a combustion chamber 4. A fuel injector (of fuel injection valve) 5 is disposed at nearly the center of the top surface of the combustion chamber 4 such that the end nozzle points into the combustion chamber 4. The fuel injector 5 is configured to inject fuel directly into the cylinder, i. e., the combustion chamber 4, at specified timing. Further, a coolant temperature sensor 18 that measures the temperature of a coolant (engine coolant temperature) is disposed to face a water jacket (not shown) of the engine 1.

Each of the fuel injectors 5 is connected to a common rail (accumulator) 6 wherein high-pressure fuel is stored. High-pressure fuel is supplied to the common rail 6 by an injection pump driven by the engine or a motor after the engine is started, and a pressure sensor 6a that detects the internal fuel pressure (common rail pressure) is disposed on the common rail 6. The common rail 6 is also connected to a high-pressure supply pump 8 driven by a crank shaft 7. This high-pressure supply pump 8 is configured to maintain the fuel pressure detected in the common rail 6 by the pressure sensor 6a above approximately 20 MPa during idling, for example, and above 50 MPa during other driving conditions.

A crank angle sensor 9 is disposed on the crankshaft 7 to detect its rotation angle. The crank angle sensor 9 includes a detected plate disposed on the end of the crankshaft 7 and an electromagnetic pickup disposed around its outer circumference, and it is configured such that the electromagnetic pickup generates pulse signals as protrusions formed at specified angles around the outer circumference of the detected plate pass near it.

The engine 1 has an air intake path 10 that introduces intake air filtered through an air cleaner (not shown) into the combustion chamber 4. The downstream end of the air intake path 10 passes through a surge tank (not shown), where it branches, the branches being connected to the respective combustion chambers 4 of the cylinders 2 by means of intake ports. An air intake pressure sensor 10a that detects the supply pressure to each cylinder 2 is disposed in the surge tank.

In order from upstream toward downstream, an air flow sensor 11 that detects the amount of air intake introduced to the engine 1, a blower 12 that is driven by a turbine 21 described below and compresses the intake air, an intercooler 13 that cools the air compressed by blower 12, and an air intake restrictor valve 14 that restricts the cross sectional area of the air intake path 10 are disposed in the air intake path 10.

This air intake restrictor valve 14 comprises a butterfly valve with notches to allow the passage of air intake even when in a fully closed state, and like the EGR valve 24 described below, it is configured such that the opening of the valve is controlled by controlling the magnitude of the negative pressure acting on a diaphragm actuator 15 by means of a solenoid valve 16 for negative pressure control. There is also a sensor (not shown) that detects the opening of the air intake restrictor valve 14.

An exhaust path 20 for discharging exhaust gas from the combustion chamber 4 of each cylinder 2 is connected to the engine 1. The upstream end of this exhaust path 20 is branched and is connected to the combustion chamber 4 of each cylinder 2 via an exhaust port not shown in the drawing. In order from upstream toward downstream, an $O_2$ sensor (not shown) whose output changes rapidly at the point the air-fuel ratio of the exhaust gas becomes roughly the stoichiometric air-fuel ratio, a turbine 21 rotated by the exhaust gas flow, an NOx reducing catalyst 22 that reduces and eliminates NOx at least in the exhaust gas, and an NOx sensor 19 that detects the NOx concentration in the exhaust gas after it has passed through the NOx reducing catalyst 22 are disposed in this exhaust path 20.

The NOx reducing catalyst 22, which is a NOx purification catalyst, is a cordierite unit formed in the shape of a honeycomb having numerous through-holes extending parallel to each other in the direction of flow of the exhaust gas, and two catalyst layers are formed on the sidewall of each of these through-holes. The catalyst layers are formed of platinum (Pt) and rhodium (Rh) carried on porous MFI zeolite (ZSM5) or similar material as the support material.

The above NOx purification catalyst 22 is configured such that if the air fuel mixture in the combustion chamber becomes lean and the oxygen concentration in the exhaust gas becomes high, e.g., greater than 4%, the NOx is reacted with the reducing agent and reduced, whereby the NOx in the exhaust gas is removed. When the oxygen concentration is low, the above NOx purification catalyst 22 functions as a three-way catalyst.

At a location upstream from the turbine 21, the exhaust path 20 is branched and connected to the upstream end of an exhaust gas return path (EGR path) 23, which returns some of the exhaust gas to the intake side. The downstream end of this EGR path 23 is connected to the air intake path 10 at a location downstream from the air intake valve 14. Also, a negative pressure-action exhaust gas return flow adjustment valve (EGR valve) 24 is disposed at a downstream location in the EGR path 23. This embodiment is configured such that some of the exhaust gas in the exhaust path 20 is returned to the air intake path 10 while the flow volume is adjusted by the EGR valve 24. The EGR valve 24 and EGR path 23 make up an exhaust gas return (EGR) unit 33.

In the EGR valve 24, the valve itself is pushed by a spring in the closed direction and by a diaphragm 24a in the open direction, whereby the aperture of the EGR path 23 is adjusted linearly. That is, a negative pressure path 27 is connected to the diaphragm 24a, and this negative pressure path 27 is connected to a vacuum pump (negative pressure source) via a solenoid 28 for negative pressure control. The solenoid 28 opens and closes the negative pressure path 27 under the control of a signal from an ECU 35 described below, whereby the EGR valve negative drive pressure is adjusted and the open and close operation of the EGR valve 24 is performed. A lift sensor 26 is also provided that detects the position of the valve unit of the EGR valve 24.

The fuel injection valves 5, the high-pressure supply pump 8, the air intake restrictor valve 14, the EGR valve 24, the turbocharger 25, etc., are respectively configured to operate based on control signals from the engine control unit (ECU) 35.

The ECU 35 receives the output signals from the pressure sensor 6a, the crank angle sensor 9, the air flow sensor 11, the coolant temperature sensor 18, the lift sensor 26 for the EGR valve 24, and an acceleration sensor 32 that detects how much an accelerator pedal (not shown) is depressed by the driver of the vehicle, as well as other signals.

In this embodiment, the ECU 35 controls the operation of the engine, and it also comprises a fuel injection control unit 36 that performs main injection control, which controls the main injection wherein fuel is injected from each fuel injection valve 5 at a specified time near the top of the compression stroke, after-injection control, which controls the injection time of after-injection based on the time of completion of combustion by the main injection such that the combustion of added fuel injected from the fuel injector 5 starts upon completion of combustion by the main injection (i.e., time at which the heat generation rate of the main injection goes below approximately 0), pilot injection control, which controls pilot injection wherein fuel is injected from the fuel injector 5 in order to perform premix combustion at a specified interval in advance of the main injection, and other controls, and an EGR control unit 37 that controls the exhaust gas return flow by controlling the EGR valve 24. That is, the injection control unit 36 of this embodiment has the functions of a main injection control means, an after-injection control means, and a pilot injection control means.

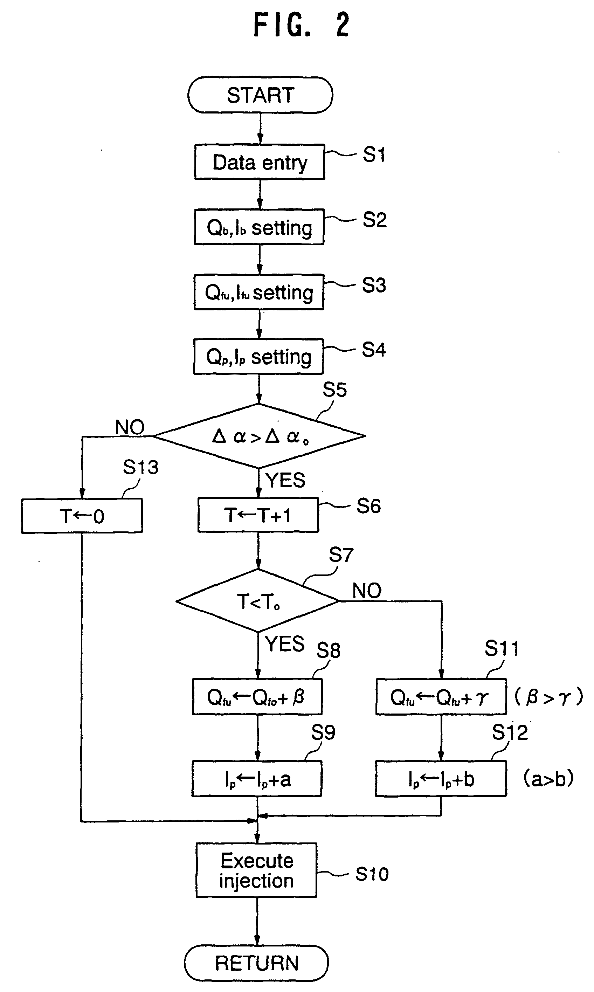

The fuel injection control executed in the ECU 35 will now be explained with reference to the flowchart in FIG. 2.

After starting, in step S1, the crank angle signal from the crank angle sensor 9, the acceleration from the acceleration sensor 32, the amount of air intake from the airflow sensor 11, and other data are input. Next, in step S2, using the target torque Tr calculated from the acceleration and the engine rpm Ne calculated from the crank angle signal as address data, the basic fuel injection amount $Q_b$ is read from an established basic injection amount map and the injection time $I_b$ is read from a map established in advance.

Next, in step S3, the basic injection amount $Q_{fu}$ and injection time $I_{fu}$ for the after-injection are set. The basic injection amount $Q_{fu}$ and injection time $I_{fu}$ for after-injection are read from a map wherein amounts are established in advance according to the target torque Tr and engine rpm Ne and then set.

In this map, the injection amount $Q_{fu}$ of after-injection is set such that fuel injection by after-injection is increased (in amount or rate) during driving conditions wherein the amount of soot generated by combustion by the main injection is greater than a specified amount more than when the amount of soot generated is less than the specified amount, whereby it is set to suppress the generation of soot. Here, fuel injection amount by after-injection refers to an absolute amount of fuel injected by after-injection, and fuel injection ratio refers to the ratio of the fuel injection amount by after-injection to the fuel injection amount by main injection.

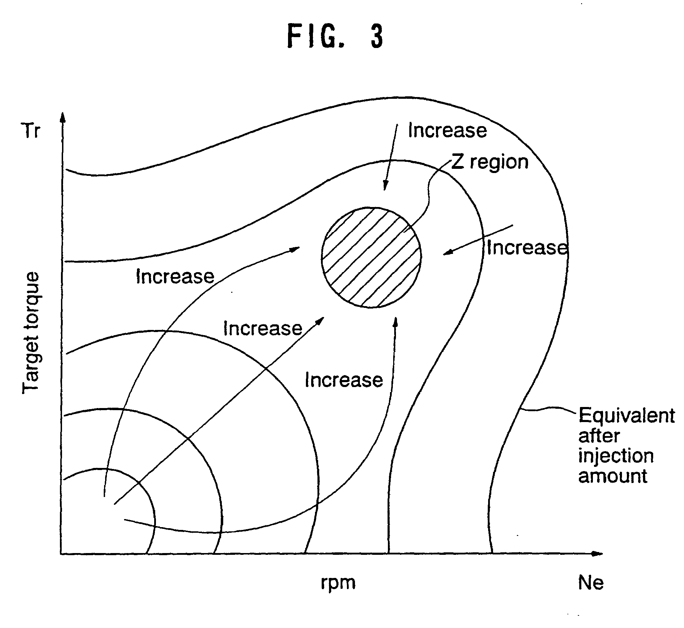

In this embodiment, the basic fuel injection amount $Q_{fu}$ by after-injection is set as shown in FIG. 3 such that it gradually increases from the low-rpm/low-load region, full load region and other peripheral regions toward the high-rpm (e.g., 2,500 rpm)/high-load region (Z region indicated by hatching). Therefore, when the operating state of the engine is high rpm and high load, the fuel injection amount $Q_{fu}$ by after-injection is increased compared to other operating states.

In this embodiment, the ratio of the injection amount by after-injection to the injection amount by main injection is 10% to 20% during low-rpm, low-load operation and increases to 20% to 50% during high-rpm, high-load operation.

As an alternative, the fuel injection amount $Q_{fu}$ by after-injection can be increased in regions wherein the amount of soot increases, e.g., when the A/F is rich, when pilot injection is being performed, and when main injection is retarded, compared to other operating states.

Further, the injection amount $Q_{fu}$ by after injection can be set using the map for setting the injection amount $Q_{fu}$ by after-injection, irrespective of the state of soot generation. A configuration can also be used wherein after-injection is not performed during idling and other low-rpm, low-load operation and is performed in regions other than low-rpm, low-load operation. Yet another configuration can be used wherein a map in which the after-injection amount is 0 during normal operation and after-injection is performed only during specified acceleration by adding a specified value as described below to the after-injection amount, i.e., to 0.

The injection time $I_{fu}$ of after-injection is mapped in consideration of the after-injection ignition delay (0.4 to 0.7ms) and ineffective injection time such that the combustion of fuel injected by after-injection starts when the heat generation rate of the main injection goes below approximately 0 (when combustion by main injection is complete). By setting it this way, the combustion of fuel injected by after-injection starts when the heat generation rate goes below approximately 0, i.e., when diffusion combustion after the premix combustion of fuel injection by main injection into the combustion chamber is complete. Therefore, since combustion by after-injection starts in a state wherein the mixing of soot and oxygen present in the combustion chamber has progressed, it is reasonable to assume that the generation of soot is reduced.

The injection time of after-injection can also be set such that combustion by after-injection starts at approximately the time the heat generation rate by the main injection drops below approximately 0 (within $\pm 10°$ or, more preferably, $\pm 5°$ of the crank angle is desirable).

It is known from "Discourse on Internal Combustion Engines," (Fujio Nagao, Yokendo Co., Ltd.), that the heat generation rate $dQ/d\theta$ can be expressed as shown in equation (1):

$$dQ/d\theta = A/(K(\theta) - 1) \times [V(\theta) \cdot (dp(\theta)/d\theta) + K(\theta) \cdot P(\theta) \cdot$$

$$(dV(\theta)/d\theta)] \tag{1}.$$

Here, A is the mechanical equivalent of heat, $K(\theta)$ is the ratio of specific heat, $V(\theta)$ is the stroke volume, $P(\theta)$ is the pressure inside the cylinder, and $\theta$ is the crank angle.

According to the user manual for the combustion analyzer CB566 made by Ono Sokki Co., Ltd., the above specific heat ratio $(\theta)$ is expressed by equations (2) through (5):

$$K(\theta) = Cp/Cv \tag{2}$$

$$Cp = ap + b\, (T(\theta)/100) + c(T(\theta)/100)^2 + d(100/T(\theta)) \tag{3}$$

$$Cv = Cp - (A \cdot Ro)/M \tag{4}$$

$$T(\theta) = (P(\theta) \cdot V(\theta))/29.27 \cdot G \tag{5}.$$

Here, Cp is the specific heat at constant pressure, Cv is the specific heat at constant volume, Ro is the gas constant, M is the molecular weight of the air, $T(\theta)$ is the gas temperature, G is the gas weight, and ap, b, c and d are other constants.

According to equations (2) through (5), the heat generation rate $dQ/d\theta$ becomes a function $f(P(\theta), V(\theta))$ of pressure inside the cylinder $P(\theta)$ and the stroke volume $V(\theta)$. Also, when the stroke volume $V(\theta)$ is expressed using the bore diameter B and stroke S, it is expressed by equation (6), and therefore the above heat generation rate $dQ/d\theta$ is expressed by equation (7):.

$$V(\theta) = (\pi \cdot B^2 S/8) \cdot (1 - \cos\theta) \tag{6}$$

$$dQ/d\theta = [f(P(\theta + \Delta\theta), V(\theta + \Delta\theta)) - f(P(\theta), V(\theta)]/\Delta\theta \tag{7}.$$

Therefore, if data for the pressure inside the cylinder is available for each crank angle, it is possible to calculate the above heat generation rate based on this. In this embodiment, the completion time of diffusion combustion is calculated from the heat generation rate (i.e., time at which the heat generation rate goes below approximately 0) obtained in this way, and a map is used wherein the injection time $I_{fu}$ of after-injection is set at a time equivalent to the ignition delay time of after-injection or other delay time before this completion time.

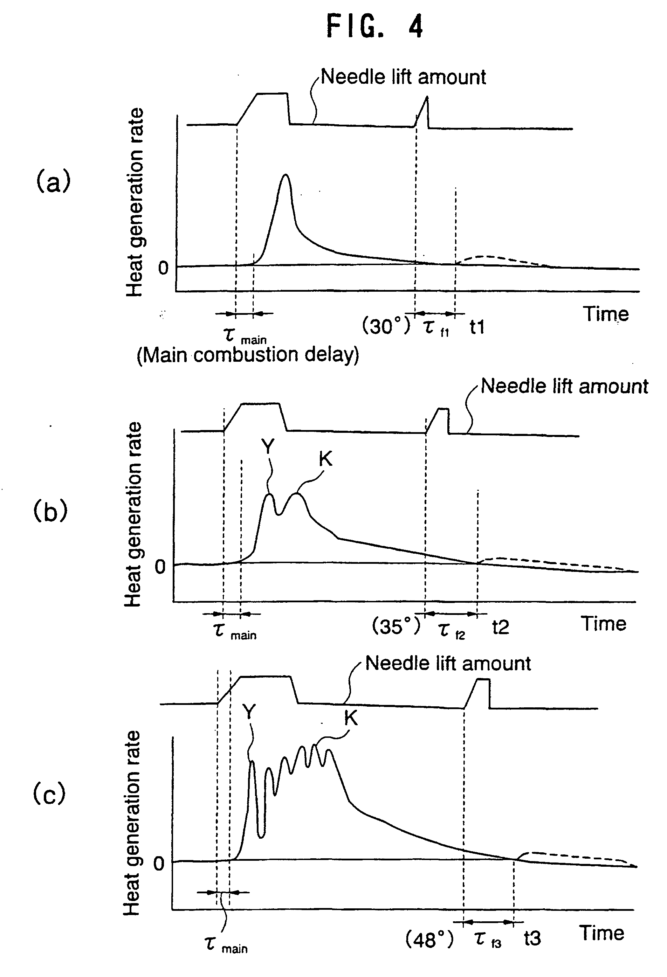

The completion time of diffusion combustion varies depending on the operating state of the engine, and the completion time of diffusion combustion tends to be later as the engine load and rpm increase. For example, at an engine rpm of 2000 and mean effective pressure Pe of 0.57 MPa, which represent a moderate rpm and a moderate load, heat generation Y due to premix combustion of fuel injected by main injection near the top of the compression stroke of the piston and a nearly equivalent heat generation K due to diffusion combustion occur as shown in FIG. 4 (b), which is a graph of results calculated by the above method, and diffusion combustion is complete at time t2 delayed by ignition delay $\tau_{f2}$ (approximately 0.5 ms) from approximately 35° (CA) after the top of the compression stroke.

At an engine rpm of 2,500 rpm and mean effective pressure Pe of 0.9 MPa, which represent a high rpm and high load, heat generation K occurs due to diffusion combustion over a rather long period compared to heat generation Y due to premix combustion as shown in FIG. 4(c), and diffusion combustion is complete at the rather late time t3 delayed by ignition delay $\tau_{f3}$ (approximately 0.7 ms) from approximately 48° (CA) after the top of the compression stroke.

At an engine rpm of 1,500 rpm and mean effective pressure Pe of 0.3 MPa, which represent a low rpm and low load, it is difficult to distinguish the premix combustion of fuel and diffusion combustion based on heat generation, but diffusion combustion is complete at the relatively early time t1 delayed by ignition delay $\tau_{f1}$ (approximately 0.6 ms) from approximately 30° (CA) after the top of the compression stroke.

Therefore, it is desirable to set the after-injection time such that after-injection is performed in the vicinity of the completion point of this diffusion combustion, i.e., between 25° and 35° (CA) after the top of the compression stroke at low rpm and low load, between 33° and 40° (CA) after the top of the compression stroke at moderate rpm and moderate load, and between 45° and 48° (CA) after the top of the compression stroke at high rpm and high load.

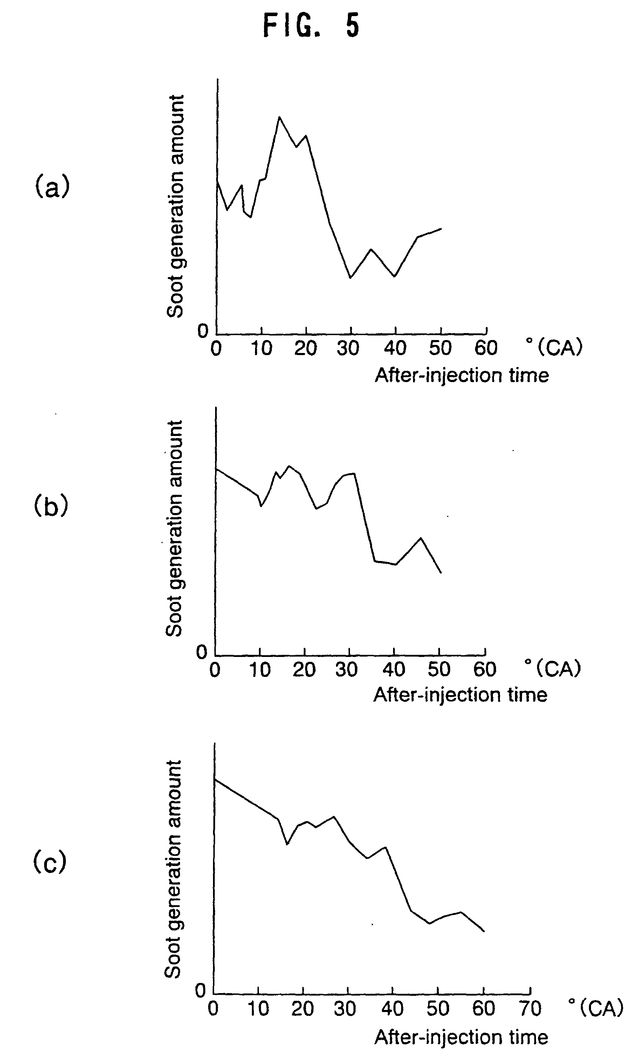

This can be seen from FIG. 5(a), (b) and (c), which are graphs of the experimental results showing the relationship between the after-injection time and soot generation amount during low rpm and low load, moderate rpm and moderate load, and high rpm and high load, respectively.

In this embodiment, as indicated by the needle lift amount in FIG. 4, the after-injection time is set such that after-injection is performed at 30° (CA) after the top of the compression stroke at low rpm and low load, at 35° (CA) after the top of the compression stroke at moderate rpm and moderate load, and at 48° (CA) after the top of the compression stroke at high rpm and high load, and in each operating state, combustion by after-injection starts at the respective completion times t1, t2 and t3 of diffusion combustion resulting in the heat generation indicated by the dotted line in FIG. 4.

In other operating conditions, as well, the injection time of after-injection is mapped so that combustion by after-injection starts at the point of completion of diffusion combustion.

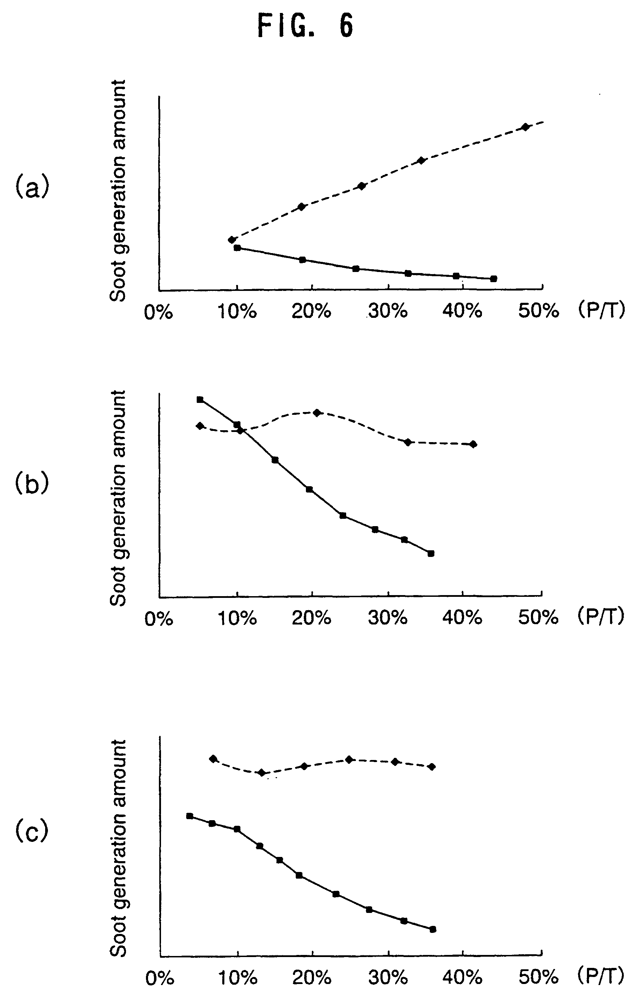

FIG. 6 is a graph showing the relationship between the after-injection amount (ratio to main injection) and soot generation amount. In order to measure the amount of soot generated when the ratio of the after-injection amount to the main injection amount (P/T) was varied between 10% and 45%, we performed an experiment at an engine rpm of 1,500 rpm and a mean effective pressure Pe of 0.3 MPa, which represent a low rpm and low load, wherein after-injection was performed at 30° (CA) after the top of the compression stroke such that combustion by after-injection started at time t1 at which diffusion combustion by the main injection of fuel was complete, and as shown by the solid line in FIG. 6(a), the amount of soot generated decreased as the after-injection ratio (P/T) increased. In contrast to this, when after-injection was performed at 8° after the top of the compression stroke such that combustion by after-injection started at a point prior to the completion of diffusion combustion, the amount of soot generated increased as the after-injection ratio (P/T) increased as indicated by the dashed line in FIG. 6(a).

When we performed a similar experiment at an engine rpm of 2,000 rpm and a mean effective pressure Pe of 0.57 MPa, which represent a moderate rpm and moderate load, wherein after-injection was performed at 35° (CA) after the top of the compression stroke such that combustion by after-injection started at time t2 at which diffusion combustion by the main injection of fuel was complete, and as shown by the solid line in FIG. 6(b), the amount of soot generated decreased as the after-injection ratio (PIT) increased. If injection was performed at 20° after the top of the compression stroke such that combustion by after-injection started at a point prior to the completion of diffusion combustion, the amount of soot generated did not exhibit a significant change even when the after-injection ratio (P/T) increased as indicated by the dashed line in FIG. 6(b).

When we performed yet another similar experiment at an engine rpm of 2,500 rpm and a mean effective pressure Pe of 0.9 MPa, which represent a high rpm and high load, wherein after-injection was performed at 48° (CA) after the top of the compression stroke such that combustion by after-injection started at time t3 at which diffusion combustion by the main injection of fuel was complete, and as shown by the solid line in FIG. 6(b), the amount of soot generated decreased as the after-injection ratio (P/T) increased. If injection was performed at 20° after the top of the compression stroke such that combustion by after-injection started at a point prior to the completion of diffusion combustion, the amount of soot generated did not exhibit a significant change even when the after-injection ratio (P/T) increased as indicated by the dashed line in FIG. 6(c).

From this it can be seen that when after-injection is performed such that combustion by after-injection starts at the point at which diffusion combustion by the main injection of fuel completes, the amount of soot generated can be reduced by increasing the fuel injection amount $Q_{fu}$ in after-injection.

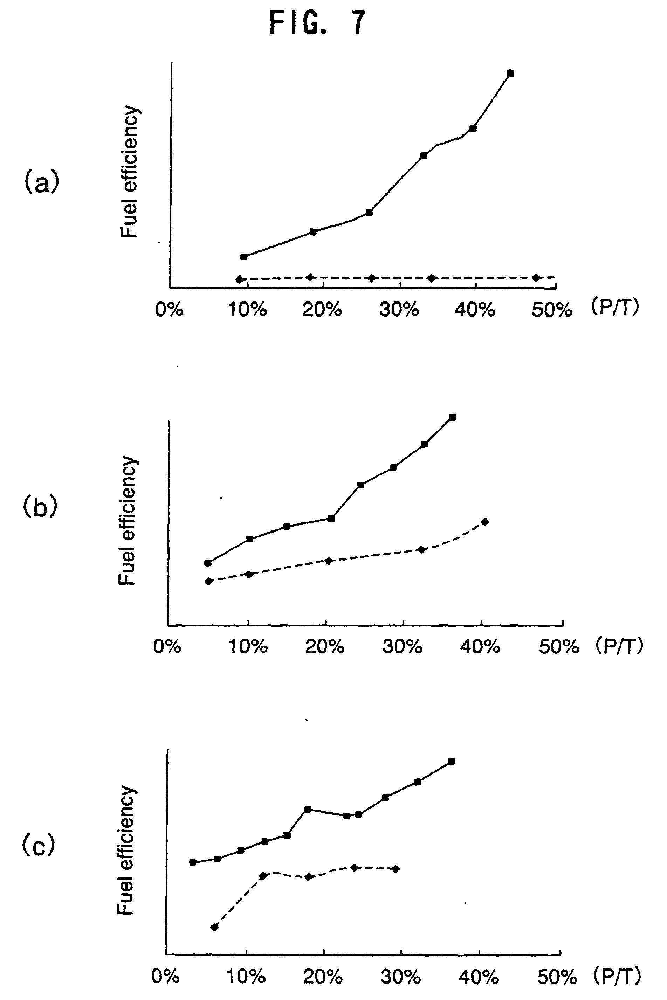

FIG. 7 contains graphs showing the relationship between the ratio of the after-injection amount to the main injection amount (P/T) and fuel efficiency. FIG. 7(a), (b) and (c) are graphs of the fuel efficiency measured when the ratio of the after-injection amount to the main injection amount (PIT) was varied between 10% and 45% under the same low rpm and low load, moderate rpm and moderate load, and high rpm and high load as in FIG. 6(a), (b) and (c). As in FIG. 6, the solid lines indicate the results when after-injection was performed at 30°, 35° and 48° (CA), respectively, after the top of the compression stroke such that combustion by after-injection started at time t1 at which time diffusion combustion by the main injection of fuel was complete, and the dashed lines indicate the results when after-injection was performed 8°, 20° and 20°, respectively, after the top of the compression stroke such that combustion by after-injection started at a time prior to the completion of diffusion combustion.

As indicated by the solid lines in FIG. 7(a), (b) and (c), when after-injection is performed such that combustion by after-injection starts at the point of completion of diffusion combustion by the main injection of fuel, fuel efficiency drops as the ratio of after-injection to main injection increases. However, in the above embodiment, the ratio of after-injection to main injection (P/T) is below approximately 20% during low rpm and low load and during moderate rpm and moderate load, and therefore the drop in fuel efficiency in this region is suppressed.

Next, in step S4, the injection amount $Q_p$ and injection time $I_p$ of pilot injection are set. In this embodiment, the injection amount $Q_p$ of pilot injection is a fixed value set in the range of 30% to 50% of the main injection amount $Q_b$ during low load, for example. The injection time $I_p$, however, is pulled from a specified map using the target torque Tr and engine rpm Ne as address data.

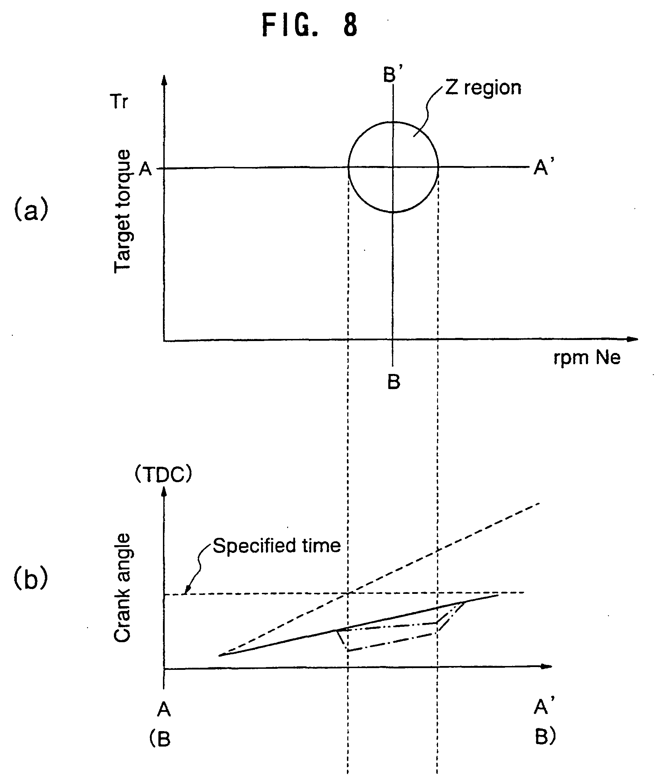

FIG. 8 shows the relationship between the map (b) for setting the injection time $I_p$ for pilot injection in this embodiment and the map (a) for setting the injection amount of after-injection. In this drawing, the injection time $I_p$ for pilot injection is indicated by the difference (crank angle) between pilot injection and main injection. The injection time $I_p$ for pilot injection in this embodiment is set such that the interval between it and main injection is short compared to the injection time (dashed line) of pilot injection when after-injection is not performed as indicated by the solid line in FIG. 8 (b).

Pilot injection injects a fixed amount of fuel in advance of the main injection in order to generate a premix combustion in the combustion chamber and thereby reduce the noise (explosive sound) during combustion by the main injection, and it is known that the closer this injection time is to the injection time of the main injection, the more effective noise reduction is. However, when pilot injection is brought near the main injection, there is a tendency for increased generation of soot, and therefore since the suppression of soot generation takes priority, the injection time of pilot injection had to be separated from the injection time of the main injection in regions where the generation of soot is marked, e.g., high rpm, high load regions.

In this embodiment, the generation of soot is suppressed by after-injection, and therefore noise reduction can be achieved by setting the pilot injection time closer to the main injection than when after-injection is not performed, thus making it possible to suppress both soot generation and noise in roughly all operating regions.

Further, in the high-rpm, high-load operation region (Z region), a setting that delays the injection time for pilot injection even later can be used as in the alternative examples indicated by the single-dot dashed line and double-dot dashed line in FIG. 8(b). By this means, during increased injection by after-injection (Z region), the delay in the injection time of pilot injection in response to the change in operating state toward high rpm and high load can be controlled such that it is smaller than the delay in the state wherein fuel injection by after-injection is not performed in the Z region periphery, which represents a relatively similar operating state. The reason why the change in the injection time is continuous rather than stepped in the extreme change toward the high-rpm, high-load operating region (Z region) is to avoid a sudden change in the noise.

In this region, the injection amount (rate) by after-injection is maximized and the generation of soot is minimized, and therefore even in the region (Z region) where much soot is generated, the extent of separation of the injection timing of pilot injection, which had to be separated from the main injection in the prior art because suppression of the generation of soot had priority, from the main injection can be reduced, thus making it possible to actively reduce noise.

In step S5, it is checked whether the rate of change $\Delta\alpha$ in acceleration $\alpha$ is larger than a specified value $\Delta\alpha_0$, i.e., whether the acceleration state is larger than a specified value. If the result in step S5 is YES, i.e., the acceleration state is larger than a specified value, then 1 is added to the timer value T in step S6, and in step S7 it is checked whether the timer value T is smaller than a specified value $T_0$. Here, a timer value T smaller than the specified value $T_0$ (YES) indicates the initial stage of the acceleration state, and a timer T value larger than the specified value $T_0$ (NO) indicates that it is not the initial stage of an acceleration state.

That is, when the result in step S7 is YES, i.e, the initial stage of an acceleration state, then in step S8 a specified value $\beta$ is added to the basic injection amount $Q_{fu}$ for after-injection set in step S3, thus setting the injection amount $Q_{fu}$ for after-injection in initial acceleration. In step S9, a specified value a is added to the basic injection time $I_p$ for pilot injection set in step S4, thus setting the injection time $I_p$ for pilot injection in initial acceleration, after which processing proceeds to step S10.

If the result in step S7 is NO, i.e., not an initial stage of acceleration, then in step S11 a prescribed value $\gamma$ is added to the basic injection amount $Q_{fu}$ for after-injection set in step S3, thus setting the injection amount $Q_{fu}$ for after-injection in acceleration other than in the initial stage, and in step S12 a prescribed value **b** is added to the injection time $I_p$ for pilot injection set in step S4, thus setting the injection time $I_p$ for pilot injection for after-injection in acceleration other than in the initial stage, after which processing proceeds to step S10.

Further, if the result in step S5 is NO, i.e., the acceleration is less than a prescribed value, the value of timer T becomes 0 in step S12 and processing proceeds to step S10.

In step S11, the fuel injector 5 is operated and pilot injection, main injection and after-injection to the combustion chamber are performed according to the amounts $Q_b$, $Q_{fu}$ and $Q_p$ and times $I_b$, $I_{fu}$ and $I_p$ set in steps S2, S3, S4, S8, S9, S11 and S12

Here, the values $\beta$, $\gamma$, a and b have the relationship $\beta > \gamma$ and a > b. Therefore, the injection amount $Q_{fu}$ of after-injection becomes large during specified acceleration and the injection time $I_q$ of pilot injection is delayed (retarded), thus shortening the injection interval with the main injection, but in the initial stage of that acceleration, the injection amount $Q_{fu}$ of after-injection becomes even larger and the injection time $I_q$ of pilot injection is delayed (retarded) even more, thus shortening the injection interval with the main injection. Therefore, the generation of soot during a specified acceleration is suppressed by the increase in the injection amount $Q_{fu}$ of after-injection and noise is suppressed by retarding the pilot injection time $I_q$. During initial acceleration, the generation of soot is effectively suppressed by an even larger increase in injection amount $Q_{fu}$ in after-injection and noise is effectively reduced by an even greater retardation of the pilot injection time $I_q$. In this way, control of the injection amount $Q_{fu}$ of after-injection is executed depending on the amount of soot generated, thus both preventing the generation of soot and improving fuel efficiency.

In this embodiment, the injection amount in after-injection during acceleration is increased by 5% to 20% with respect to the ratio of the injection amount in after-injection to the main injection prior to acceleration.

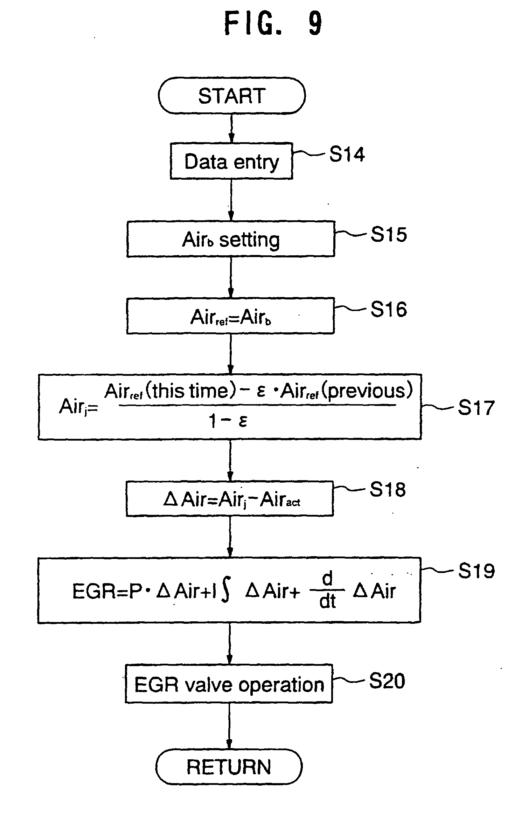

EGR control executed in the exhaust return control means 37 of the ECU 35 will now be explained with reference to the flowchart in FIG. 9.

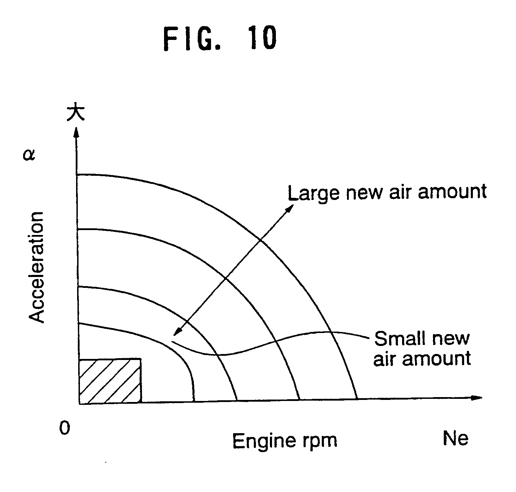

First, in step S14, the engine rpm, acceleration, and other data are input, and then in step S15 the basic target for new air amount $Air_b$ corresponding to the operating state of the engine is set from a map established in advance such as that shown in FIG. 10, for example, based on the acceleration and engine rpm. By this means, it is set such that the EGR amount (valve aperture) becomes smaller as the rpm and load increase. In the idle region indicated by the hatched area in the example in FIG. 10, it is set such that the basic target new air amount $Air_b$ becomes larger than during a moderate load on the engine. By this means, during acceleration from an idle state to a high-rpm, high-load region or during acceleration from a state other than idling, the EGR amount becomes smaller, whereby a rich A/F can be suppressed, and since the after-injection amount is also increased, a synergistic effect is achieved whereby soot is further decreased.

Next, in step S16, the reference new air amount $Air_{ref}$ is set to the basic target new air amount $Air_b$. In step S17, the previous reference new air amount $Air_{ref}$ multiplied by $\varepsilon$ is subtracted from this reference new air amount $Air_{ref}$ (current), and then by dividing by $(1 - \varepsilon)$, the target new air amount $Air_j$ is calculated. This is so-called "first-order lead correction," and by means of this processing the intake delay of new air is corrected, thus quickly and actively reducing EGR so there is no delay in the reduction of EGR, moving the air-fuel ratio to the lean side, and reducing the generation of soot when acceleration is larger than a specified value and fuel injection by the after-injection control means is increased. Here, $\varepsilon$ is a constant determined by the shape of the air intake pipe leading to the combustion chamber from the EGR valve via the air intake path.

Further, in step S18, the actual new air amount $Air_{act}$ based on a value detected by the airflow sensor 11 is subtracted from this target new air amount $Air_j$ to yield $\Delta Air$. The new air amount is calculated by the airflow sensor and the intake air pressure sensor 10a. In this embodiment, an airflow sensor 11 is used that is capable of detecting backflow. By means of this kind of airflow sensor, pulsing due to EGR during low air intake can be detected, thus making it possible to accurately calculate the amount of new air based on this pulsing.

Next, in step S19, PID control is performed on $\Delta Air$ to determine the EGR amount, and then in step S20 EGR is performed by operating the EGR valve based on this EGR amount.

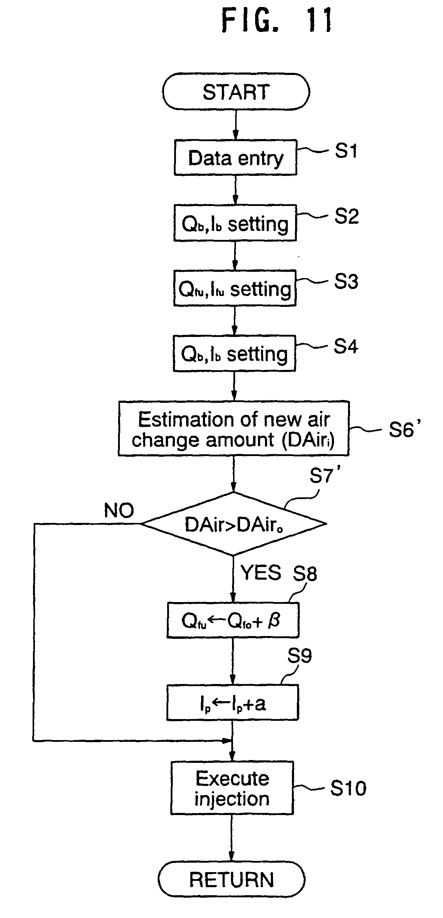

For example, in the above embodiment, the acceleration state is judged to be larger than a specified value based on the rate of change $\Delta \alpha$ in acceleration $\alpha$ (S5 and S6 in FIG. 2), but as shown in S6' and S7' in the flowchart in FIG. 11, so-called "first-order delay correction" of the detection value from the airflow sensor is performed and the acceleration state can be judged to be larger than a specified value based on the actual new volume ($Air_j$), which takes the calculated new air change into account.

In this configuration, after the amount and time of pilot injection are set in step S4, a value obtained by adding the product of the detected previous new air amount $Air_{act}$ and $(1-\theta)$ to the product of the constant $\theta$ determined by the transfer function of the air intake system and the new air amount $Air_{act}$ detected this time in step S6' is used as the new air amount $Air_i$ actually taken into the engine,

$$(Air_i = \theta Air_{act} \text{ (this time)} + (1-\theta)Air_{act} \text{ (previous))},$$

and the value obtained by subtracting the new air amount $Air_i$ (previous) from $Air_{act}$ (current) is assumed to be the new air change amount ($DAir_i$).

Further, in step S7', it is checked whether the new air change amount ($DAir_i$) is greater than a specified new air amount ($DAir_0$), and if YES, i.e., it is larger, then the acceleration state is larger than a specified value and processing proceeds to step S8, but if NO, i.e., it is smaller, then acceleration is smaller than a specified state and processing proceeds to step S10. In this configuration, the coefficients β and a in steps S8 and S9 can be different from the coefficients β and a in the above embodiment.

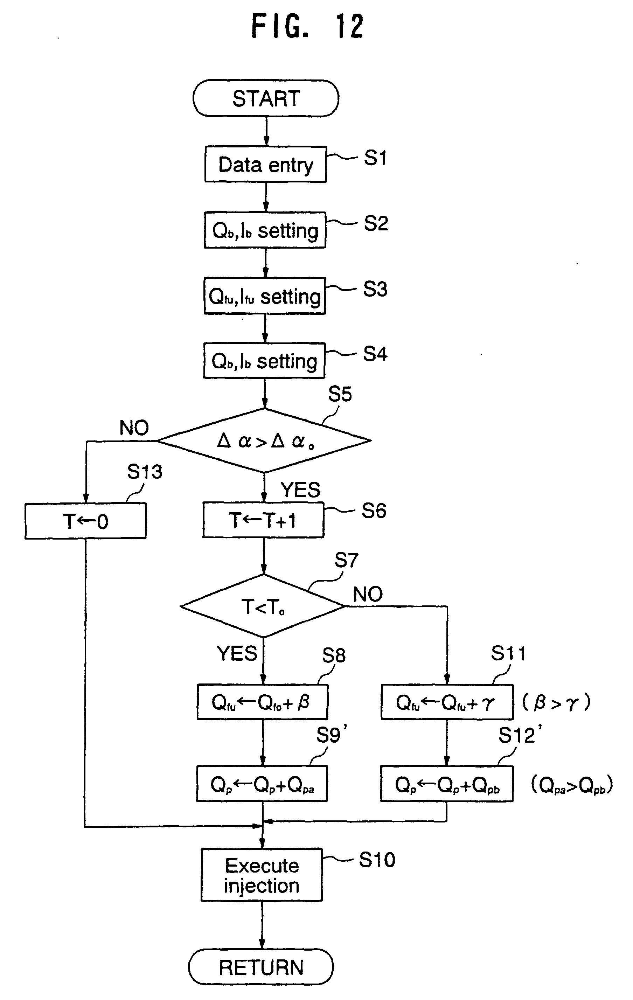

Also, in the above embodiment, depending on the judgment of the initial stage of acceleration, a different coefficient is added to the injection time $I_p$ of pilot injection whereby control is performed that further delays the injection time of pilot injection during initial acceleration (S9 and S12 in FIG. 2), but as shown in S9' and S12' in the flowchart in FIG. 12, control can be performed whereby a different coefficient is added to the injection amount $Q_p$ of pilot injection depending on whether or not the judgment of the initial stage of acceleration and the injection amount is further increased during initial acceleration.

In this embodiment, if the result of step S7 is YES, i.e., it is judged to be the initial stage of acceleration, then in step S9' a specified value $Q_{pa}$ is added to the injection amount $Q_p$ of pilot injection set in step S4. If the result in step S7 is NO, i.e., it is not judged to be the initial stage of acceleration, then in step S12' a specified value $Q_{pb}$ is added to the injection amount $Q_p$ of pilot injection set in step S4. Here, since $Q_{pa} > Q_{pb}$, the injection amount $Q_p$ of pilot injection increases further in an initial acceleration state, whereby noise is effectively suppressed. A configuration is also possible wherein the processing of S9 and S12 in FIG. 2 and the processing of S9' and S12' in FIG. 12 are both performed.

For example, the above embodiment is a fuel injection control device for diesel engines that performs EGR control and pilot injection control, but it is possible for this invention to not perform one or both of these functions.

Also, in the above embodiment, pilot injection, main injection and after-injection are performed one time each, but this invention is applicable to configurations that perform multistage injection.

As described above, this invention providesa fuel injection control device for diesel engines that is capable of suppressing drops in fuel efficiency and reducing the amount of soot in exhaust gas.

**Claims**

1.  A fuel injection control device for diesel engines comprising:

    a fuel injector that injects fuel directly into the combustion chamber of the diesel engine;

    a main injection control means that controls the main injection of fuel from said fuel injector at a specified time near the top of the compression stroke; and
    an after-injection control means that controls the after-injection of added fuel from said fuel injector after said main injection,
    said after-injection control means controlling the injection time of after-injection so that the combustion by the after injection starts at a stage in which the combustion by said main injection is complete and also increasing the fuel injection by said after-injection during an acceleration state, wherein the acceleration is larger than a specified value more than when the acceleration is lower than the specified value.

2.  The fuel injection control device for diesel engines of claim 1, wherein said after-injection control means increases the after-injection in the initial acceleration stage of said acceleration state more than during acceleration states other than said initial acceleration stage.

3.  The fuel injection control device for diesel engines of claim 1 or 2, wherein said diesel engine is equipped with a turbocharger.

4.  The fuel injection control device for diesel engines of any one of claims 1 to 3, further comprising an EGR control means that controls an EGR means which recirculates a portion of the exhaust gas to the air intake.

5.  The fuel injection control device for diesel engines of claim 4, wherein said EGR control means reduces EGR in order to reduce the generation of soot during the increase in fuel injection by said after-injection control means.

6.  The fuel injection control device for diesel engines of any one of claims 1 to 5, further comprising a pilot injection control means that controls pilot injection wherein fuel is injected from said fuel injector to perform premix combustion at a specified interval in advance of said main injection, said interval being controlled to be shorter during fuel injection increase by said after-injection control means than when fuel injection increase is not performed by said after-injection control means.

**7.** The fuel injection control device for diesel engines of any one of claims 1 to 5, further comprising a pilot injection control means that controls pilot injection wherein fuel is injected from said fuel injector to perform premix combustion at a specified interval in advance of said main injection, the injection of said pilot injection being controlled to increase more during fuel injection increase by said after-injection control means than when fuel injection increase is not performed by said after-injection control means.

**Patentansprüche**

**1.** Kraftstoffeinspritzsteuervorrichtung bzw. -system für Dieselmotoren, umfassend:

eine Kraftstoffeinspritzeinrichtung, welche Kraftstoff direkt in die Verbrennungskammer des Dieselmotors einspritzt;

Haupteinspritzungs-Regel- bzw. -Steuermittel, welche die Haupteinspritzung von Kraftstoff von der Kraftstoffeinspritzeinrichtung zu einer bestimmten Zeit nahe der Spitze bzw. oberen Bereichs des Kompressionshub regeln bzw. steuern; und

Nacheinspritzungs-Regel- bzw. -Steuermittel, welche die Nacheinspritzung von hinzugefügtem Kraftstoff von der Kraftstoffeinspritzeinrichtung nach der Haupteinspritzung regeln bzw. steuern,

wobei die Nacheinspritzungs-Steuermittel den Einspritzzeitpunkt einer Nacheinspritzung derart regeln bzw. steuern, daß die Verbrennung durch die Nacheinspritzung an einer Stufe beginnt, in welcher die Verbrennung durch die Haupteinspritzung abgeschlossen ist, und auch die Kraftstoffeinspritzung durch die Nacheinspritzung während eines Beschleunigungszustands erhöhen, wobei die Beschleunigung größer als ein bestimmter Wert ist, und zwar mehr als wenn die Beschleunigung niedriger als der bestimmte Wert ist.

**2.** Kraftstoffeinspritzsteuervorrichtung für Dieselmotoren nach Anspruch 1, wobei die Nacheinspritzungs-Steuermittel die Nacheinspritzung in den ursprünglichen bzw. beginnenden Beschleunigungsstufe des Beschleunigungszustands mehr als während Beschleunigungszuständen verschieden von der beginnenden Beschleunigungsstufe erhöhen.

**3.** Kraftstoffeinspritzsteuervorrichtung für Dieselmotoren nach Anspruch 1 oder 2, wobei der Dieselmotor mit einem Turbolader ausgerüstet ist.

**4.** Kraftstoffeinspritzsteuervorrichtung für Dieselmotoren nach einem der Ansprüche 1 bis 3, weiters umfassend Abgasrückführungs- bzw. EGR-Regel- bzw. -Steuermittel, welche Abgasrückführungs- bzw. EGR-Mittel steuern bzw. regeln, welche einen Teil des Abgases zu dem Lufteinlaß rezirkulieren.

**5.** Kraftstoffeinspritzsteuervorrichtung für Dieselmotoren nach Anspruch 4, wobei die EGR-Steuermittel EGR reduzieren, um die Erzeugung von Ruß während des Anstiegs in einer Kraftstoffeinspritzung durch die Nacheinspritzungs-Steuermittel zu reduzieren.

**6.** Kraftstoffeinspritzsteuervorrichtung für Dieselmotoren nach einem der Ansprüche 1 bis 5, weiters umfassend Vor- bzw. Piloteinspritzungs-Regel- bzw. -Steuermittel, welche eine Voreinspritzung regeln bzw. steuern, wobei Kraftstoff von der Kraftstoffeinspritzeinrichtung eingespritzt ist bzw. wird, um eine Vormischungsverbrennung an einem bestimmten Intervall vor der Haupteinspritzung durchzuführen, wobei das Intervall geregelt bzw. gesteuert ist, um kürzer während eines Kraftstoffeinspritzanstiegs durch die Nacheinspritzungs-Steuermittel zu sein, als wenn eine Kraftstoffeinspritzungserhöhung nicht durch die Nacheinspritzungs-Steuermittel durchgeführt wird.

**7.** Kraftstoffeinspritzsteuervorrichtung für Dieselmotoren nach einem der Ansprüche 1 bis 5, weiters umfassend Vor- bzw. Piloteinspritzungs-Regel- bzw. -Steuermittel, welche eine Voreinspritzung regeln bzw. steuern, wobei Kraftstoff von der Kraftstoffeinspritzeinrichtung eingespritzt ist bzw. wird, um eine Vormischungsverbrennung an einem bestimmten Intervall vor der Haupteinspritzung durchzuführen, wobei die Einspritzung der Piloteinspritzung derart geregelt bzw. gesteuert ist bzw. wird, um mehr während einer Kraftstoffeinspritzungserhöhung durch die Nacheinspritzungs-Steuermittel anzusteigen, als wenn eine Kraftstoffeinspritzungs-Erhöhung nicht durch die Nacheinspritzungs-Steuermittel durchgeführt wird.

## EP 1 211 404 B1

**Revendications**

1.  Dispositif de commande d'injection de carburant pour des moteurs diesel, qui comprend:

    un injecteur de carburant qui injecte le carburant directement dans la chambre de combustion du moteur diesel,
    un moyen de commande d'injection principale qui commande l'injection principale de carburant par ledit injecteur de carburant à un moment spécifique proche du sommet de la course de compression et
    un moyen de commande de post-injection qui commande la post-injection de carburant supplémentaire par ledit injecteur de carburant après ladite injection principale,
    ledit moyen de commande de post-injection commandant le moment d'injection de la post-injection de telle sorte que la combustion qui suit la post-injection commence à un stade auquel la combustion qui suit ladite injection principale est terminée et augmentant également l'injection de carburant lors de ladite post-injection pendant une situation d'accélération lorsque l'accélération est davantage supérieure à une valeur spécifique que lorsque l'accélération est inférieure à la valeur spécifique.

2.  Dispositif de commande d'injection de carburant pour des moteurs diesel selon la revendication 1, dans lequel ledit moyen de commande de post-injection augmente davantage la post-injection au stade d'accélération initiale de ladite situation d'accélération que pendant les situations d'accélération autres que ledit stade d'accélération initiale.

3.  Dispositif de commande d'injection de carburant pour des moteurs diesel selon la revendication 1, dans lequel ledit moteur diesel est doté d'un turbocompresseur.

4.  Dispositif de commande d'injection de carburant pour des moteurs diesel selon l'une quelconque des revendications 1 à 3, qui comprend en outre un moyen de commande de recirculation de gaz d'échappement ("exhaust gas recirculation" - EGR) qui commande un moyen à EGR qui recycle une partie des gaz d'échappement dans l'admission d'air.

5.  Dispositif de commande d'injection de carburant pour des moteurs diesel selon la revendication 4, dans lequel ledit moyen de commande à EGR réduit l'EGR pour réduire la création de suie pendant l'augmentation de l'injection de carburant par ledit moyen de commande de post-injection.

6.  Dispositif de commande d'injection de carburant pour des moteurs diesel selon l'une quelconque des revendications 1 à 5, qui comprend en outre un moyen de commande d'injection pilote qui commande l'injection pilote, le carburant étant injecté par ledit injecteur de carburant pour réaliser une combustion du mélange préalable à un intervalle spécifique avant ladite injection principale, ledit intervalle étant commandé de manière à être plus court pendant l'augmentation de l'injection de carburant par ledit moyen de commande de post-injection que lorsque l'augmentation de l'injection de carburant n'est pas réalisée par ledit moyen de commande de post-injection.

7.  Dispositif de commande d'injection de carburant pour des moteurs diesel selon l'une quelconque des revendications 1 à 5, qui comprend en outre un moyen de commande d'injection pilote qui commande l'injection pilote, le carburant étant injecté par ledit injecteur de carburant pour réaliser une combustion du mélange préalable à un intervalle spécifique avant ladite injection principale et ladite injection pilote étant commandée de manière à augmenter davantage pendant l'augmentation de l'injection de carburant par ledit moyen de commande de post-injection que lorsque l'augmentation de l'injection de carburant n'est pas réalisée par ledit moyen de commande de post-injection.

# FIG. 1

ECU 35

INJECTION CONTROL UNIT 36

EXHAUST GAS RETURN CONTROL UNIT 37

ACCELERATION SENSOR 32

NEGATIVE PRESSURE SOURCE 29

31 · 28 · 16 · 22 · 20 · 11 · 25 · 12 · 19 · 30 · 21 · 18 · 9 · 13 · 33 · 23 · 6 · 8 · 6a · 5 · 26 · 27 · 24a · 24 · 15 · 14 · 10a · 4 · 3 · 2 · 7 · 1 · 10

EP 1 211 404 B1

# FIG. 2

START

Data entry — S1

$Q_b, I_b$ setting — S2

$Q_{fu}, I_{fu}$ setting — S3

$Q_p, I_p$ setting — S4

S5
$\Delta\alpha > \Delta\alpha_o$
NO / YES

S13
$T \leftarrow 0$

S6
$T \leftarrow T+1$

S7
$T < T_o$
YES / NO

S8
$Q_{fu} \leftarrow Q_{fo} + \beta$

S11
$Q_{fu} \leftarrow Q_{fu} + \gamma$  $(\beta > \gamma)$

S9
$I_p \leftarrow I_p + a$

S12
$I_p \leftarrow I_p + b$  $(a > b)$

Execute injection — S10

RETURN

# FIG. 3

EP 1 211 404 B1

# FIG. 4

(a)

Needle lift amount

Heat generation rate

0

$\tau_{main}$
(Main combustion delay)

$(30°)$ $\tau_{f1}$ t1

Time

(b)

Needle lift amount

Heat generation rate

Y    K

0

$\tau_{main}$

$(35°)$ $\tau_{f2}$ t2

Time

(c)

Needle lift amount

Heat generation rate

Y    K

0

$\tau_{main}$

$(48°)$ $\tau_{f3}$ t3

Time

# FIG. 5

(a)

Soot generation amount vs After-injection time °(CA)

(b)

Soot generation amount vs After-injection time °(CA)

(c)

Soot generation amount vs After-injection time °(CA)

# FIG. 6

(a)

(b)

(c)

# FIG. 7

(a)

(b)

(c)

# FIG. 8

(a)

(b)

# FIG. 9

START

Data entry — S14

Air$_b$ setting — S15

Air$_{ref}$=Air$_b$ — S16

$$Air_j= \frac{Air_{ref}(\text{this time})- \varepsilon \cdot Air_{ref}(\text{previous})}{1- \varepsilon}$$ — S17

$\Delta Air = Air_j - Air_{act}$ — S18

$$EGR = P \cdot \Delta Air + I \int \Delta Air + \frac{d}{dt} \Delta Air$$ — S19

EGR valve operation — S20

RETURN

# FIG. 10

# FIG. 11

```
            ┌─────────────┐
            │    START    │
            └─────────────┘
                   │
                   ▼
            ┌─────────────┐
            │ Data entry  │────── S1
            └─────────────┘
                   │
                   ▼
            ┌─────────────┐
            │ Qb,Ib setting│────── S2
            └─────────────┘
                   │
                   ▼
            ┌─────────────┐
            │ Qfu,Ifu setting│──── S3
            └─────────────┘
                   │
                   ▼
            ┌─────────────┐
            │ Qb,Ib setting│────── S4
            └─────────────┘
                   │
                   ▼
        ┌───────────────────────┐
        │ Estimation of new air │────── S6'
        │ change amount (DAiri)  │
        └───────────────────────┘
                   │           S7'
                   ▼
   NO      ◇─────────────────◇
   ┌───────┤   DAir>DAiro    │
   │       ◇─────────────────◇
   │                │ YES  S8
   │                ▼
   │          ┌─────────────┐
   │          │ Qfu←Qfo+β   │
   │          └─────────────┘
   │                │     S9
   │                ▼
   │          ┌─────────────┐
   │          │  Ip←Ip+a    │
   │          └─────────────┘
   │                │
   └────────────────┤
                    ▼
            ┌─────────────┐
            │   Execute   │────── S10
            │  injection  │
            └─────────────┘
                   │
                   ▼
            ┌─────────────┐
            │   RETURN    │
            └─────────────┘
```

# FIG. 12

```
                    ┌──────────────┐
                    │    START     │
                    └──────┬───────┘
                           │
                    ┌──────────────┐
                    │  Data entry  │──── S1
                    └──────┬───────┘
                           │
                    ┌──────────────┐
                    │ Qb,Ib setting│──── S2
                    └──────┬───────┘
                           │
                    ┌──────────────┐
                    │Qfu,Ifu setting│──── S3
                    └──────┬───────┘
                           │
                    ┌──────────────┐
                    │ Qb,Ib setting│──── S4
                    └──────┬───────┘
                           │            S5
          NO        ◇──────────────◇
      ┌─────────────  Δα > Δα₀
      │           ◇──────────────◇
 S13  │                  │ YES
      │           ┌──────────────┐
┌──────────┐      │   T←T+1      │──── S6
│   T←0    │      └──────┬───────┘
└────┬─────┘             │            S7
     │            ◇──────────────◇   NO
     │                T<T₀         ──────────┐
     │            ◇──────────────◇           │
     │                  │ YES                │
     │                  │      S8            │      S11
     │           ┌──────────────┐     ┌──────────────┐
     │           │ Qfu←Qfo+β    │     │ Qfu←Qfu+γ    │ (β>γ)
     │           └──────┬───────┘     └──────┬───────┘
     │                  │      S9'           │      S12'
     │           ┌──────────────┐     ┌──────────────┐
     │           │ Qp←Qp+Qpa    │     │ Qp←Qp+Qpb    │ (Qpa>Qpb)
     │           └──────┬───────┘     └──────┬───────┘
     │                  │                    │
     └──────────────────┼────────────────────┘
                        │
                 ┌──────────────┐
                 │   Execute    │──── S10
                 │  injection   │
                 └──────┬───────┘
                        │
                 ┌──────────────┐
                 │   RETURN     │
                 └──────────────┘
```